# EUROPEAN PATENT SPECIFICATION

(11) **EP 1 391 291 B1**
(45) Date of publication and mention of the grant of the patent: **06.12.2006**
(21) Application number: 03010170.3
(22) Date of filing: 06.05.2003
(51) Int. Cl.: B29K 27/18, C09K 3/10, C09K 3/22

(54) **Method and additive for dry coalescing and kneading powders, for the exfoliation thereof**
Verfahren und Additiv zum Zusammenfügen und Kneten von Pulvern, Formen von Folien daraus
Méthode et additif pour le coalescage et le malaxage à sec de poudres en vue de leur exfoliation

(30) Priority: 21.06.2002 IT MI20021383
(43) Date of publication of application: 25.02.2004
(73) Proprietor: DRY DOUGHY S.r.l., 20035 Lissone (Milano) (IT)
(72) Inventor: Murer, Angelo, 20035 Lissone (IT)
(74) Representative: Cicogna, Franco

(56) References cited:
- EP-A- 0 770 659
- US-A- 3 551 205
- US-A- 5 216 068
- US-A- 5 480 735

## Description

The present invention relates to a method for dry coalescing and kneading powders, for performing exfoliation thereof.

As is known, a very important problem occurring in several industrial fields is that of handling, processing and using powder products which, frequently, generate fumes, with consequent environmental polluting problems.

A drawback associated with prior powder handling methods is that the great volatility of said powders, when they are very fine, generates great processing problems.

This drawback, in a lot of cases, makes the use of said powders practically impossible.

Thus, it is not possible to make, by using said prior diffused powder processing methods, all the desired articles of manufacture.

The document EP-A-0 770 659 discloses "the mechanical stability of aqueous PTFE emulsion(s)" (page 1, lines 17-21) does not disclose or suggest to disperse such a PTFE material through powders.

The document US-A-3 551 205 discloses the simultaneous coagulation and precipitation of a PTFE aqueous emulsion by vigorous mechanical agitation and thus forming a binder for a mixtures of fibers and conducting material (column 4, lines 14-22).

Though this latter document teaches substeps of the characterizing step of the present method, it is not quite clear if "dried flocculated polytetrafluoroethylene" is explicitly disclosed by this document. "Precipitation and coagulation of polytetrafluoroethylene in the slurry can be facilitated by addition of acetone to the aqueous slurry during the mechanical agitation. When the slurry is cast to form a web, polytetrafluoroethylene extends throughout the web binding the carbon particles with fibers. Ounce dried, the polytetrafluoroethylene is resistant to most organic solvents and is an insoluble component suitable for use in many organic and aqueous electrolyte systems" (column 4, lines 19-28). In any case, this document does not disclose or suggest the steps of present claim 1, let alone in combination with subsequent steps thereof.

### SUMMARY OF THE INVENTION

Accordingly, the aim of the present invention is to overcome the above disclosed drawbacks, by providing a method for dry coalescing and kneading powders, for their exfoliation, which is adapted to coat said powders, with a microfibrous coating aggregating the powder particles thereby providing a material which can be easily exfoliated or reduced to a sheet form.

Within the scope of the above mentioned aim, a main object of the present invention is to provide such a processing method and additive which, as applied to powder materials, allow to improve said powder handling and to prevent said powders from polluting the encompassing environment, thereby a broad range of articles of manufacture can be easily produced.

Yet another object of the present invention is to provide such a lubricating additive providing the powder materials contacted thereby with very good sliding properties, thereby facilitating the processing of said powder materials, for example the molding and extruding thereof.

According to one aspect of the present invention, the above mentioned aim and objects, as well as yet other objects, which will become more apparent hereinafter, are achieved by a method for dry coalescing and kneading powder materials, according to the main claim.

Further characteristics and advantages of the present invention will become more apparent hereinafter from the following detailed disclosure of a method for dry coalescing and kneading powder materials, for the exfoliation thereof, which method generally comprises the step of starting from a commercial aqueous polytetrafluoro-ethylene (-(CF₂ CF₂)_{N}-) suspension or emulsion.

Generally, the powder materials to be processed have a particle size range from 1 micron to 3 mm.

In particular, the polymer is water diluted to an amount depending on the aggregate and absorbing characteristics of the powder the polymer is applied to.

To provide an optimum flocculation of the polytetrafluoro-ethylene material into the aqueous suspension or emulsion, it is rotatively stirred with a very high stirring force, for example up to 2500 rpm's, the end of the flocculation treatment being indicated by the filtrate material clearness.

Upon filtering, said emulsion is fully dried, and the concentrate material obtained therefrom is dispersed into the powder materials to be processed.

It should be apparent that the polymer amount should be selected depending on the cohesion properties to be imparted to the processed powder materials.

In particular, said polymer amount will advantageously range from a minimum value of 0.2% to a maximum value of 30%.

Then the powder dispersed concentrate material is subjected to a kneading step, according to conventional kneading methods, and it can be successively exfoliated or reduced into a sheet form by lamination.

The thus obtained material can be used in a very broad range of applications, for example, for mixing resins with "gamma-absorbing" metals, for radiologic screen applications, packaging applications and for forming outer packaging materials.

Moreover, said material can also be used for providing inner coatings for cars, for antimagnetically screening electronic apparatus, for making in synthetic marble and concrete materials, "cavity walls", roofing undertile materials, superlight bricks, light false ceilings and so on, agglomerating fine powder chemical products and very fine powder chemical products (SiO2, P.T.F.E. for dyes and pigment materials and so on), compound masterbatch pastes, plastics material agglomerates and PVC, inks, paints, rubbers in the cosmetic and pharmaceutical industries, and in the galvanic field and pharmaceutical and food fields.

Furthermore, said material can be also used for processing silica, pigments and dyes, anti-flame materials, lubricating additives, zinc borate, molybdenum, disulphide, graphite, micronized sodium benzoate, powder hard rubber, micronized polyethylene, micronized PVC, powder iron or carbon, micronized waxes, talc, titanium dioxide, aluminium silicate, metal powders, such as aluminium, bronze, copper, gold and the like, pharmaceutical intermediate products and toner products.

Another possible application is in the furniture industry, for making foamed panels, directly printed upon half-finished products, synthetic marbles articles, washbasin parts and so on.

In this connection it should be pointed out that the above mentioned products would be very safe from a polluting standpoint, thereby they can be used for disposing of ash materials, for example embedding them therein.

From the above discussion, it should be apparent that the application fields of the invention can be very different.

For example, as a novel application thereof, the invention can be used for making micronized silica, for paints, polyester resins, rubber and elastomeric material adhesives, plastics materials, PVC, paper materials, cables, cosmetic and food products, tooth pastes and RTV and HTV compounds

In particular, the use of the invention in this field allows to eliminate silica powders which would be susceptible to pollute the environment, as well as provide savings in storing said materials, packaging and shipping them, and improving the environmental conditions.

Moreover, the above mentioned products allow to improve machining and processing properties, because of the lubrication power provided by the inventive additive, thereby allowing to use shorter processing cycles and greater processing speeds, with a less power and a better efficiency.

Another particular application field is in preparing of composite materials since the inventive products allow to make batches of different additives, in powder form, to be intimately mixed and dispersed in other media, such as resins, solvents, plastics materials and the like, without handling polluting, dangerous and large volume powders.

That same method and products, moreover, allow to greatly reduce the storing, shipping and any other costs related to raw materials for making a desired formulation.

For preparing pigment masterbatches and coloring and additive materials, it is possible to provide large dosages of the active portion, since the inventive additive can agglomerate and remove air entrapped in granulated and other raw materials.

Moreover, for processing pigments and dyes, the subject product can be added with different doses, to advantageously provide not powdery agglomerate, paste and other composite materials.

Furthermore, in processing sintering powders such as polyethylene, polypropylene, polyamide, PVC and the like, it is possible to provide article of manufactures devoid of elastic memory and tension properties, which, accordingly, can be easily patterned and molded.

It is also possible to make rigid foamed cellular constructions, by including foaming agents.

Moreover, it is also possible to make reinforcement screen, gauze or fiber materials, of multilayered construction with decorated glossy outer sheet elements.

In processing curing powders such as concrete, gypsum, lime oxide materials and the like, said powders can be patterned before soaking them to provide thin configurations.

Said powders, furthermore, can be further subjected to embossing and the like processing operations.

A main feature of the subject kneaded material is the possibility of die-cutting the made sheet elements made thereby to provide alveolar constructions of small density.

The inclusion of the aqueous curing material would be controlled by the reaction stechiometry, and these article of manufactures can also contain foaming agents.

In processing hydrosensible powder materials, such as titanium hexafluoride or polysaccharides, it is also possible to provide a dry treatment and forming, and this without any problems.

Yet another use example of the novel technology according to the invention is its application for making, by a novel type of method, different article series, such as washbasins, objects and the like, of synthetic marble materials.

In such a method, after having made a die or matrix according to the above disclosed process, and properly selected the mineral materials, the subject product allows to properly compact said materials by using a resin: in this connection it should be pointed out that the different densities and specific weights of the used mineral materials would prevent any suspension and layering phenomena from occurring.

Thus, said articles of manufacture will be characterized by an evenly distributed construction.

In this novel methods it is possible to use quartz and natural stone materials having of different thicknesses and weights, while holding the resin/mineral material ratio within a greatly improved range, thereby providing products of very good aesthetic characteristics.

A further important advantage is that it is possible to make finished products having all the above disclosed characteristics, and this by using a simple casting process, i.e. very low cost molds, and without the need of performing complex processing or handling operations of mineral materials.

Yet another application of the invention is in making filler materials for high density polyethylene or polypropylene polymers.

In this connection, it is to be pointed out that, at present, polypropylene is filled with wood materials, by using the Solvay technique or the so-called "Woodstock" method.

In particular the invention allows to include said filler materials up to a maximum rate of 70 parts per 100 parts of high density polyethylene, for making, for example, filled polyethylene panels and the like.

The invention, moreover, can also be used for making foamed cellular - reinforced concrete materials, by using a processing autoclave, and starting from a silica sand base and powder CaO and aluminium.

A panel of 10 cm of thickness, in particular, would have a unit weight for unit surface less than 80 Kg/m², and a sound damping power of R(dV)= 40, as well as a low thermal transmittance.

In making outer plasters, the optimum particle size distribution of the aggregates would facilitate to embed air therein, without problems.

In an exemplary composition, a base 270, a sand 1000 and a concrete material 350 are used with the addition of a film forming adhesive material.

In forming tile elements for false ceilings, a laminated plaster or gypsum material, in thin thicknesses (2-3 mm), to be in situ curved and cured would be, on the other hand, used.

Such a composition would present a base 100 and a plaster or gypsum material 400 and could be mass colored and reinforced by reinforcement metal gauzes or microfibers, with optional embossing operations.

For coating walls, it would be possible to prepare a CaO based formulation with colored pigments and mineral small stones, to be applied and sprayed with water.

Such a mixture would include a base 100, minerals 200 and CaO 100, and it could be used for making wall coatings by coupling it with electrically conductive sheet elements made of graphite, or special carbon black materials.

For making corrugated sheet elements for roofs, the most suitable polymeric material would be a high density polyethylene powder, to be kneaded with a sand material according to the invention.

In such an application, a foil material on a tubular grid would be processed in an IR oven, to provide therein a continuous cross corrugated pattern.

In such a case, a sand 300 and a high density polyehtylene polymer 100 would be used.

In particular, foamed polypropylene panels, having a density from 0.2 to 0.3 g/cm³, could replace conventional wood chip panels in furniture, automobilistic and railway fields.

In such an application, sintering, foaming and molding processes would be simultaneously carried out, with the advantage of providing small cost, increased stiffness, easily made products of small thermal conductivity.

In making special filters, a vegetable carbon material can be easily kneaded and exfoliated to form, for example, capsules for absorbing noxious gases and photovoltaic and fuel cell applications for advanced batteries including salt materials, such as titanium hexafluoride, stiffened by thermoplastic powders and coupled to a carbon electrode.

Modern batteries, in particular, could have their bipolar plate elements and electrodes made by the same technology.

From the above disclosure it should be apparent that the invention fully achieves the intended aim and objects.

In particular, the invention provides a method for dry coalescing and kneading powder materials, for the exfoliation thereof, allowing to optimize all the operating steps, and to obtain end results which could not be obtained by prior methods.

The invention, as disclosed, is susceptible to several modifications and variations, all coming within the scope of the invention.

Moreover, all the constructional details can be replaced by other technically equivalent elements.

In practicing the invention, the used materials, provided that they are compatible to the intended application, as well as the contingent size and shapes, can be any, depending on requirements.

## Claims

1. A method for making a kneaded aggregated material for making sheets therefrom, said material being prepared from powder materials, comprising the step of dry coalescing and kneading said powder materials, **characterized in that** said method further comprises the step of aggregating said powder materials by dispersing through said powder materials being coalesced and kneaded an additive material prepared by forming an aqueous polytetrafluoroethylene emulsion, stirring said emulsion to flocculate said emulsion, fully drying said flocculated emulsion to provide dried flocculated polytetrafluoroethylene, thereby providing a kneaded and aggregated material including a powder material and flocculated polytetrafluoroethylene dispersion and which can be reduced into sheets by any known sheet forming process.

2. A method, according to Claim 1, **characterized in that** said powder materials have a particle size range from 1 micron to 3mm.

3. A method, according to Claim 1, **characterized in that** said stirring is a rotary stirring.

4. A method, according to Claim 3, **characterized in that** said rotary stirring is carried out at a stirring rate up to a maximum of 2500 rpm's.

5. A method, according to Claim 1, **characterized in that** said dried flocculated polytetrafluoroethylene is dispersed through said powder materials by mixing said dried flocculated polytetrafluoroethylene in an amount of 0.2% to 30%.

6. A method, according to Claim 1, **characterized in that** said method comprises a further kneading step and an optional laminating step.

7. A method, according to claim 1, **characterized in that** said method further comprises a step of filtering said polytetrafluoroethylene suspension.

8. A method, according to claim 1, **characterized in that** said additive is provided in a filtered and dry form.

9. A method, according to claim 1, **characterized in that** said additive is added to said powder materials in an amount from 0.2% to 30% of said powder materials.

## Patentansprüche

1. Verfahren zur Herstellung eines gekneteten aggregierten Materials zum Herstellen von Folien daraus, wobei dieses Material aus Pulvermaterialien hergestellt ist, umfassend den Schritt des Zusammenfügens und Knetens der Pulvermaterialien, **dadurch gekennzeichnet, dass** das Verfahren des Weiteren den Schritt umfasst, die Pulvermaterialien zu aggregieren, indem durch die zusammengefügten und gekneteten Pulvermaterialien ein Additivmaterial dispergiert wird, das hergestellt wird durch: Bilden einer wässrigen Polytetrafluorethylenemulsion, Rühren der Emulsion bis zum Ausflocken, und vollständiges Trocknen der ausgeflockten Emulsion, so dass getrocknetes geflocktes Polytetrafluorethylen entsteht, wodurch ein geknetetes und aggregiertes Material entsteht, das ein Pulvermaterial und dispergiertes geflocktes Polytetrafluorethylen enthält und das mittels eines beliebigen Folienherstellungsverfahrens zu Folien weiterverarbeitet werden kann.

2. Verfahren nach Anspruch 1, **dadurch gekennzeichnet, dass** die Pulvermaterialien eine Teilchengröße im Bereich von 1 Mikron bis 3 mm haben.

3. Verfahren nach Anspruch 1, **dadurch gekennzeichnet, dass** das Rühren ein Rotationsrühren ist.

4. Verfahren nach Anspruch 3, **dadurch gekennzeichnet, dass** das Rotationsrühren mit einer Rührrate von maximal 2500 U/min ausgeführt wird.

5. Verfahren nach Anspruch 1, **dadurch gekennzeichnet, dass** das getrocknete geflockte Polytetrafluorethylen durch die Pulvermaterialien dispergiert wird, indem das getrocknete geflockte Polytetrafluorethylen in einer Menge von 0,2 % bis 30 % eingemischt wird.

6. Verfahren nach Anspruch 1, **dadurch gekennzeichnet, dass** das Verfahren einen weiteren Knetschritt und einen optionalen Laminierungsschritt umfasst.

7. Verfahren nach Anspruch 1, **dadurch gekennzeichnet, dass** das Verfahren des Weiteren einen Schritt des Filterns der Polytetrafluorethylensuspension umfasst.

8. Verfahren nach Anspruch 1, **dadurch gekennzeichnet, dass** das Additiv in einer gefilterten und trockenen Form bereitgestellt wird.

9. Verfahren nach Anspruch 1, **dadurch gekennzeichnet, dass** das Additiv den Pulvermaterialien in einer Menge von 0,2 % bis 30 % der Pulvermaterialien beigegeben wird.

## Revendications

1. Procédé de fabrication d'un matériau agrégé pétri pour en faire des feuilles, ledit matériau étant préparé à partir de matériaux en poudre, comprenant l'étape de coalescence sèche et de pétrissage desdits matériaux en poudre, **caractérisé en ce que** ledit procédé comprend en outre l'étape d'agrégation desdits matériaux en poudre par dispersion au travers desdits matériaux en poudre coalescés et pétris un additif préparé en formant une émulsion aqueuse de polytetrafluoréthylène, d'agitation de ladite émulsion pour la floculer, de séchage total de ladite émulsion pour fournir un polytetrafluoréthylène floculé sec, fournissant ainsi un matériau pétri et agrégé incluant un matériau en poudre et une dispersion de polytetrafluoréthylène floculé, et qui peut être réduit en feuilles par tout procédé connu de formation de feuilles.

2. Procédé, selon la revendication 1, **caractérisé en ce que** lesdits matériaux en poudre ont une granulométrie de 1 micron à 3 mm.

3. Procédé, selon la revendication 1, **caractérisé en ce que** ladite agitation est une agitation rotative.

4. Procédé, selon la revendication 3, **caractérisé en ce que** ladite agitation rotative est effectuée à une vitesse de rotation de maximum 2 500 tours par minute.

5. Procédé, selon la revendication 1, **caractérisé en ce que** ledit polytetrafluoréthylène floculé séché est dispersé au travers desdits matériaux en poudre en mélangeant ledit polytetrafluoréthylène floculé séché à hauteur de 0,2 à 30%.

6. Procédé, selon la revendication 1, **caractérisé en ce que** ledit procédé comprend une étape de pétrissage supplémentaire et une étape de laminage facultative.

7. Procédé, selon la revendication 1, **caractérisé en ce que** ledit procédé comprend en outre une étape de filtration de ladite suspension de polytetrafluoréthylène.

8. Procédé, selon la revendication 1, **caractérisé en ce que** ledit additif est fourni sous une forme filtrée et sèche.

9. Procédé, selon la revendication 1, **caractérisé en ce que** ledit additif est ajouté audits matériaux en poudre à hauteur de 0,2 à 30% desdits matériaux en poudre.
